(19) Europäisches Patentamt
European Patent Office
Office européen des brevets

(11) **EP 2 207 059 A1**

(12) **EUROPEAN PATENT APPLICATION**
published in accordance with Art. 153(4) EPC

(43) Date of publication:
**14.07.2010 Bulletin 2010/28**

(51) Int Cl.:
*G02F 1/133* (2006.01)   *F21S 2/00* (2006.01)
*F21S 8/04* (2006.01)   *G02F 1/13357* (2006.01)
*G09G 3/20* (2006.01)   *G09G 3/34* (2006.01)
*G09G 3/36* (2006.01)   *F21Y 101/02* (2006.01)

(21) Application number: **08873126.0**

(22) Date of filing: **09.10.2008**

(86) International application number:
**PCT/JP2008/068350**

(87) International publication number:
**WO 2009/110129 (11.09.2009 Gazette 2009/37)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.03.2008   JP 2008051818**

(71) Applicant: **Sharp Kabushiki Kaisha**
**Osaka-shi, Osaka 545-8522 (JP)**

(72) Inventor: **MUROI, Takao**
**Osaka-shi, Osaka 545-8522 (JP)**

(74) Representative: **Müller-Boré & Partner**
**Patentanwälte**
**Grafinger Strasse 2**
**81671 München (DE)**

(54) **LIQUID CRYSTAL DISPLAY DEVICE**

(57)   A liquid crystal panel 10 has color filters for RGB colors, i.e., three colors, and a backlight 20 includes a plurality of LEDs for each of four colors (RGB and cyan) independently controllable for luminance. A backlight data processing portion 33 divides an output signal from a color signal correction portion 32 into a plurality of areas and calculates luminance values for LEDs corresponding to each area based on a gradation in that area, thereby obtaining backlight data for four or more colors for use in driving the backlight 20. A video data processing portion 34 performs color correction on an output signal from the color signal correction portion 32 while referencing the backlight data, thereby obtaining video data for three colors for use in driving the liquid crystal panel 10. Thus, color crosstalk can be prevented, thereby achieving a high-definition multi-primary color display and precise color reproduction.

*Fig. 1*

**Description**

TECHNICAL FIELD

The present invention relates to liquid crystal display devices, particularly to a liquid crystal display device provided with a liquid crystal panel having color filters for three colors and a backlight including light sources for four or more colors.

BACKGROUND ART

In liquid crystal display devices, a liquid crystal is sealed between two transparent electrodes and voltages are applied to control switches arranged in a matrix, thereby changing orientations of liquid crystal molecules, so that light transmittance is changed to optically display an image. The liquid crystal does not emit light by itself, and therefore it is necessary to provide the liquid crystal display device with a backlight or suchlike.

While various types of backlights are available, for example, large-sized liquid crystal televisions mainly use direct type backlights. Direct type backlights are configured by a plurality of light sources arranged on a plane and a diffuser plate provided between a liquid crystal panel and the light sources so as to keep them at a constant distance. Also, there is a known drive method (hereinafter, referred to as "area-active drive") in which a plurality of LEDs (Light Emitting Diodes) are used to configure a direct type backlight and luminance of the LEDs is controlled for each area (see, for example, Patent Document 1). Liquid crystal display devices in which area-active drive is performed make it possible to achieve improved displayed image quality and reduced power consumption when compared to liquid crystal display devices having cold cathode fluorescent lamps as a backlight.

In general, an LED backlight is configured using an LED unit which includes red, green, and blue LEDs. Alternatively, the LED unit may only include a white LED or may include a white LED along with LEDs for the aforementioned three colors. Also, the LED backlight is generally configured by a plurality of LED units arranged in a matrix on backlight boards. Alternatively, the LED backlight may be configured using backlight boards on which a plurality of LED units are arranged in arrays.

Also, the following technologies are conventionally known in relation to display device color reproducibility. Concerning with an image quality adjustment method of a display device in which color characteristics data is measured for red, green, and blue, and a lookup table to be incorporated into the display device is created, Patent Document 2 describes the lookup table being created by repeating processes for obtaining two types of color characteristics data and two types of luminance values while changing signal levels. Patent Document 3 describes a color signal processing device for adaptively transforming a color gamut of a video being reproduced depending on an input video. Patent Document 4 describes a display device provided with an illumination source for generating light in three or more colors and color filters for four or more colors. Patent Document 5 describes a display device provided with light emitters for three primary colors and light emitters for another color to be caused to emit light only when the light emitters for three primary colors cannot provide color representation by themselves.

[Patent Document 1] Japanese Laid-Open Patent Publication No. 2005-338857
[Patent Document 2] Japanese Laid-Open Patent Publication No. 2006-113151
[Patent Document 3] Japanese Laid-Open Patent Publication No. 2006-5940
[Patent Document 4] International Publication Pamphlet 2004/107025
[Patent Document 5] Japanese Laid-Open Patent Publication No. 2005-227586

DISCLOSURE OF THE INVENTION

PROBLEMS TO BE SOLVED BY THE INVENTION

However, there are the following problems with the display device (Patent Document 4) having color filters for four or more colors in each pixel and the display device (Patent Document 5) having each pixel configured by light emitters for four or more colors. For example, when displaying nearly pure red with a liquid crystal display device provided with color filters for five colors (red, green, blue, yellow, and cyan) in each pixel or a self-light-emitting display device provided with light emitters for the aforementioned five colors, brightness of red is maximized, whereas brightness of the other four is minimized (i.e., the other four become darker). However, in these five-color display devices, the proportion of red in each pixel is lower than in three-color display devices. Therefore, when displaying nearly pure red, a low-resolution display is provided, i.e., an undesirable display is provided as if some pixels were dead, although the color is vivid.

Also, in the case of the liquid crystal display device having color filters for four or more colors, there are a plurality of color combinations to realize a target display color (e.g., to realize target tristimulus values X, Y, and Z). Therefore, taking an optimum combination for viewing angle characteristics of each color gradation into consideration, a more complicated algorithm is required as compared to the case of three colors, and development and adjustment of the algorithm incurs additional cost.

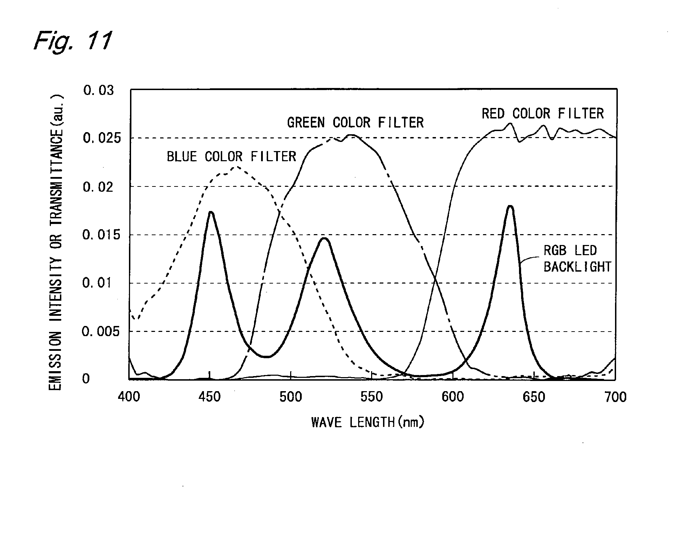

Furthermore, area-active drive for individually controlling the luminance of LEDs for a plurality of colors has a problem that color crosstalk (inconvenient color mixture) occurs and color reproducibility is reduced because of a difference between LED emission characteristics and color filter transmission characteristics. An exemplary case will be considered where the emission intensity of a three-color (red, green, and blue) LED backlight and the transmittance of color filters for three colors are those as shown in FIG. 11. In this example, the green color filter and the blue color filter greatly overlap with each other in terms of their transmission wavelength bands. Therefore, when an image is displayed based on a video signal which is high in green and blue components, light emitted from the green LED is transmitted through the blue color filter, and light emitted from the blue LED is transmitted through the green color filter, resulting in a color being displayed as if a pure color is slightly dulled.

Therefore, an objective of the present invention is to provide a liquid crystal display device capable of preventing color crosstalk as described above and achieving a high-definition multi-primary color display and precise color reproduction.

SOLUTION TO THE PROBLEMS

A first aspect of the present invention is directed to a liquid crystal display device having a function of controlling backlight luminance, comprising: a liquid crystal panel having color filters for three colors; a backlight including a plurality of light sources for each of four or more colors independently controllable for luminance; a backlight data processing portion for dividing an input video signal into a plurality of areas and calculating luminance values for light sources corresponding to each area based on a gradation in that area, thereby obtaining backlight data for four or more colors for use in driving the backlight; and a video data processing portion for performing color correction on the input video signal while referencing the backlight data, thereby obtaining video data for three colors for use in driving the liquid crystal panel.

In a second aspect of the present invention, based on the first aspect of the invention, the video data processing portion obtains a color reproduction range achievable by light transmitted through the color filters for each color when the backlight is driven using the backlight data, and performs color correction on the input video signal while referencing the obtained color reproduction range.

In a third aspect of the present invention, based on the first aspect of the invention, the backlight includes light-emitting diodes as the light sources.

In a fourth aspect of the present invention, based on the third aspect of the invention, the light-emitting diodes are controlled using a pulse-width modulation signal.

In a fifth aspect of the present invention, based on the third aspect of the invention, the backlight includes a plurality of light-emitting diodes for each of the same three colors as those of the color filters and also includes a plurality of light-emitting diodes for each of one or more colors different from those of the color filters.

In a sixth aspect of the present invention, based on the first aspect of the invention, the backlight data processing portion obtains backlight data with an added margin, in order to enlarge a color reproduction range achievable by light transmitted through the color filters for each color.

In a seventh aspect of the present invention, based on the first aspect of the invention, the backlight data processing portion obtains backlight data with an offset higher than zero, in order to suppress a calculation error.

In an eighth aspect of the present invention, based on the first aspect of the invention, the backlight data processing portion has a function of changing characteristics of the light sources that are to be referenced when obtaining the backlight data.

In a ninth aspect of the present invention, based on the first aspect of the invention, the video data processing portion has a function of changing characteristics of the light sources that are to be referenced when obtaining the video data.

A tenth aspect of the present invention is directed to a display method in a liquid crystal display device provided with a liquid crystal panel having color filters for three colors and a backlight including a plurality of light sources for each of four or more colors independently controllable for luminance, the method comprising the steps of : dividing an input video signal into a plurality of areas and calculating luminance values for light sources corresponding to each area based on a gradation in that area, thereby obtaining backlight data for four or more colors; performing color correction on the input video signal while referencing the backlight data, thereby obtaining video data for three colors; driving the backlight using the backlight data; and driving the liquid crystal panel using the video data.

EFFECT OF THE INVENTION

According to the first or tenth aspect of the present invention, by using the backlight including light sources for four or more colors, it becomes possible to achieve a multi-primary color display by enlarging a color reproduction range. Also, since the liquid crystal panel has color filters for three colors, it is possible to achieve a high-definition display when compared to the case of color filters for four or more colors. Moreover, when obtaining video data, color correction is performed while referencing the backlight data, so that it is possible to prevent color crosstalk from occurring when area-active drive is performed for independently controlling the luminance of light sources for a plurality of colors, which makes it possible to achieve precise color reproduction. In this manner, color crosstalk can be prevented, thereby achieving a high-definition multi-primary color display and precise color reproduction.

According to the second aspect of the present invention, by obtaining a color reproduction range when the backlight emits light in the current state, and performing color correction on the input video signal while referencing that range, it becomes possible to achieve precise color reproduction.

According to the third aspect of the present invention, by using light-emitting diodes, which are superior in terms of color reproducibility, luminance capability, size, longevity, etc., it becomes possible to readily configure a backlight including a plurality of light sources independently controllable for luminance.

According to the fourth aspect of the present invention, by controlling the light-emitting diodes through pulse-width modulation control, it becomes possible to suppress a change in color of light emitted from the light-emitting diodes, thereby achieving precise color reproduction.

According to the fifth aspect of the present invention, by configuring a backlight using LEDs for the same colors as color filters and LEDs for a color different from the color filters, it becomes possible to effectively enlarge a color reproduction range, thereby achieving a multi-primary color display and more precise color reproduction.

According to the sixth aspect of the present invention, by using backlight data with an added margin, it becomes possible to expand a color reproduction range and reduce calculation errors in obtaining target color coordinates at the edge of the color reproduction range.

According to the seventh aspect of the present invention, by using backlight data with an offset, it becomes possible to suppress a calculation error.

According to the eighth aspect of the present invention, by obtaining backlight data while suitably changing light source characteristics, it becomes possible to achieve precise color reproduction even when the light source characteristics fluctuate due to external factors.

According to the ninth aspect of the present invention, by obtaining video data while suitably changing light source characteristics, it becomes possible to achieve precise color reproduction even when the light source characteristics fluctuate due to external factors.

BRIEF DESCRIPTION OF THE DRAWINGS

FIG. 1 is a block diagram illustrating the configuration of a liquid crystal display device according to an embodiment of the present invention.

FIG. 2 provides cross-sectional views of a liquid crystal panel and a backlight of the liquid crystal display device shown in FIG. 1.

FIG. 3 is a view illustrating an exemplary arrangement of backlight boards of the liquid crystal display device shown in FIG. 1.

FIG. 4 is a diagram illustrating another exemplary light-emitting block of the liquid crystal display device shown in FIG. 1.

FIG. 5 is a diagram illustrating another exemplary light-emitting block of the liquid crystal display device shown in FIG. 1.

FIG. 6 is a block diagram illustrating in detail a color signal correction portion of the liquid crystal display device shown in FIG. 1.

FIG. 7 is a block diagram illustrating in detail a backlight data processing portion of the liquid crystal display device shown in FIG. 1.

FIG. 8 is a block diagram illustrating in detail a video data processing portion of the liquid crystal display device shown in FIG. 1.

FIG. 9 is a block diagram illustrating another exemplary backlight data processing portion of the liquid crystal display device shown in FIG. 1.

FIG. 10 is a graph illustrating a color reproduction range for the liquid crystal display device shown in FIG. 1.

FIG. 11 is a graph illustrating exemplary characteristics of an LED backlight and color filters of a liquid crystal display device.

## DESCRIPTION OF THE REFERENCE CHARACTERS

| | |
|---|---|
| 1 | liquid crystal display device |
| 2 | video signal source |
| 10 | liquid crystal panel |
| 11 | scanning signal line driver circuit |
| 12 | video signal line driver circuit |
| 20 | backlight |
| 21 | group of optical sheets |
| 22 | diffuser plate |
| 23 | backlight board |
| 24 | LED |
| 25 | backlight casing |
| 26 | backlight unit |
| 27 | to 29 light-emitting block |
| 30 | lookup table (LUT) |
| 31 | RGB signal processing portion |
| 32 | color signal correction portion |
| 33, 36 | backlight data processing portion |
| 34 | video data processing portion |
| 35 | drive control portion |
| 41 | color reproduction range when red, green, and blue are used |
| 42 | color reproduction range when red, cyan, and blue are used |
| 321 | y processing portion |
| 322 | color correction portion |
| 331 | LED luminance arithmetic portion |
| 332, 362 | luminance extraction portion |
| 333 | LED output data arithmetic portion |
| 334 | PWM signal output portion |
| 341 | delaying processing portion |
| 342 | LED image luminance calculation portion |
| 343 | target color correction arithmetic portion |
| 344 | video luminance output portion |

## BEST MODE FOR CARRYING OUT THE INVENTION

Hereinafter, an embodiment of the present invention will be described with reference to the drawings. Note that the present invention should not be construed to be limited to the embodiment to be described below, various modifications can be made without departing from the gist of the invention, and variants and improvements based on the basic concept of the invention are also included in the scope of the invention.

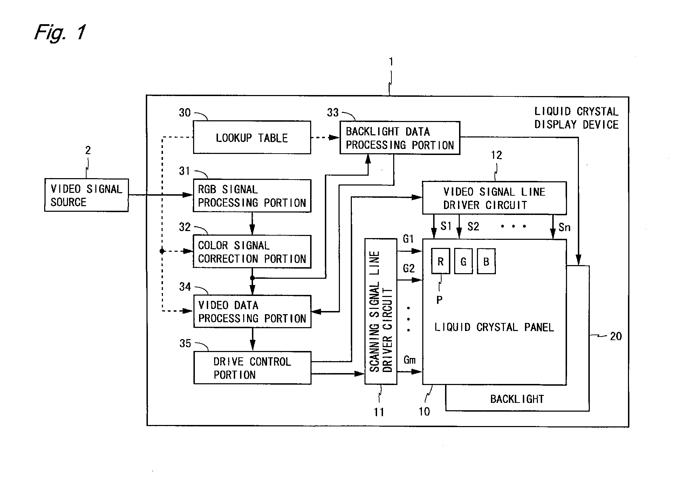

FIG. 1 is a block diagram illustrating the configuration of a liquid crystal display device according to the embodiment of the present invention. The liquid crystal display device 1 shown in FIG. 1 is provided with a liquid crystal panel 10, a scanning signal line driver circuit 11, a video signal line driver circuit 12, a backlight 20, a lookup table (hereinafter, referred to as an "LUT") 30, an RGB signal processing portion 31, a color signal correction portion 32, a backlight data processing portion 33, a video data processing portion 34, and a drive control portion 35. In the following, m is assumed to be an integer of 2 or more, and n is assumed to be a multiple of 3.

The liquid crystal panel 10 includes m scanning signal lines $G_1$ to $G_m$, n video signal line $S_1$ to $S_n$, and $(m \times n)$ pixel circuits P. The scanning signal lines $G_1$ to $G_m$ are arranged parallel to one another, and the video signal lines $S_1$ to $S_n$ are arranged parallel to one another so as to be perpendicular to the scanning signal lines $G_1$ to $G_m$. The pixel circuits P are provided in the vicinity of intersections of the scanning signal lines $G_1$ to $G_m$ and the video signal lines $S_1$ to $S_n$. The pixel circuits P are each provided with a color filter for red, green, or blue. The pixel circuit P provided with a color filter for red, green, or blue, functions as a red, green, or blue display element. These three types of pixel circuits P are arranged side by side in the extending direction (in FIG. 1, horizontal direction) of the scanning signal lines $G_1$ to $G_m$, and three of them form one pixel. In this manner, the liquid crystal panel 10 has color filters for three colors.

The scanning signal line driver circuit 11 and the video signal line driver circuit 12 are driver circuits for the liquid crystal panel 10. The scanning signal line driver circuit 11 drives the scanning signal lines $G_1$ to $G_m$, and the video signal line driver circuit 12 drives the video signal lines $S_1$ to $S_n$. More specifically, the scanning signal line driver circuit 11 selects one of the scanning signal lines $G_1$ to $G_m$ in accordance with a timing control signal outputted by the drive control portion 35, and provides a selection voltage (e.g., a high-level voltage) to the selected scanning signal line and a non-selection voltage (e.g., a low-level voltage) to the other scanning signal lines. The video signal line driver circuit 12 provides voltages, which correspond to a video signal outputted by the drive control portion 35, to the video signal lines $S_1$ to $S_n$ in accordance with a timing control signal outputted by the drive control portion 35. When driving the video signal lines $S_1$ to $S_n$, the video signal line driver circuit 12 may perform either dot-sequential drive or line-sequential drive.

The backlight 20 is provided at the backside of the liquid crystal panel 10, and irradiates the back of the liquid crystal panel 10 with light (backlight light). As light sources, the backlight 20 includes LEDs for four or more colors independently controllable for luminance (the details of which will be described later). To control the luminance of the LEDs, the backlight data processing portion 33 outputs a PWM (Pulse Width Modulation) signal.

Provided outside the liquid crystal display device 1 is a video signal source 2 for outputting a composite video signal. The RGB signal processing portion 31 performs, for example, chroma processing and matrix transformation on the composite video signal outputted by the video signal source 2, and outputs an RGB separate signal. The color signal correction portion 32, the backlight data processing portion 33, and the video data processing portion 34 obtain video data which is used for driving the liquid crystal panel 10, and backlight data which is used for driving the backlight 20, based on the RGB separate signal outputted by the RGB signal processing portion 31.

The LUT 30 has prestored therein data required for the operation of the liquid crystal display device 1. More specifically, the LUT 30 has stored therein, for example, y data required for the operation of the color signal correction portion 32, PWM data required for the operation of the backlight data processing portion 33, and PSF (Point Spread Function) data required for the operation of the video data processing portion 34.

The drive control portion 35 outputs a timing control signal to the scanning signal line driver circuit 11 and also outputs a timing control signal and a video signal to the video signal line driver circuit 12. The scanning signal line driver circuit 11 and the video signal line driver circuit 12 drive the liquid crystal panel 10 based on the output signals from the drive control portion 35. As a result, the light transmittance of the pixel circuits P in the liquid crystal panel 10 is changed. On the other hand, the LEDs in the backlight 20 emit light with luminance corresponding to the backlight data obtained by the backlight data processing portion 33. The luminance of each pixel of the liquid crystal panel 10 changes in accordance with the luminance of the LEDs and the light transmittance of the pixel circuit P. Accordingly, preferred video data and backlight data are obtained based on the RGB separate signal outputted by the RGB signal processing portion 31, and the liquid crystal panel 10 and the backlight 20 are driven using such data, thereby displaying a desired image.

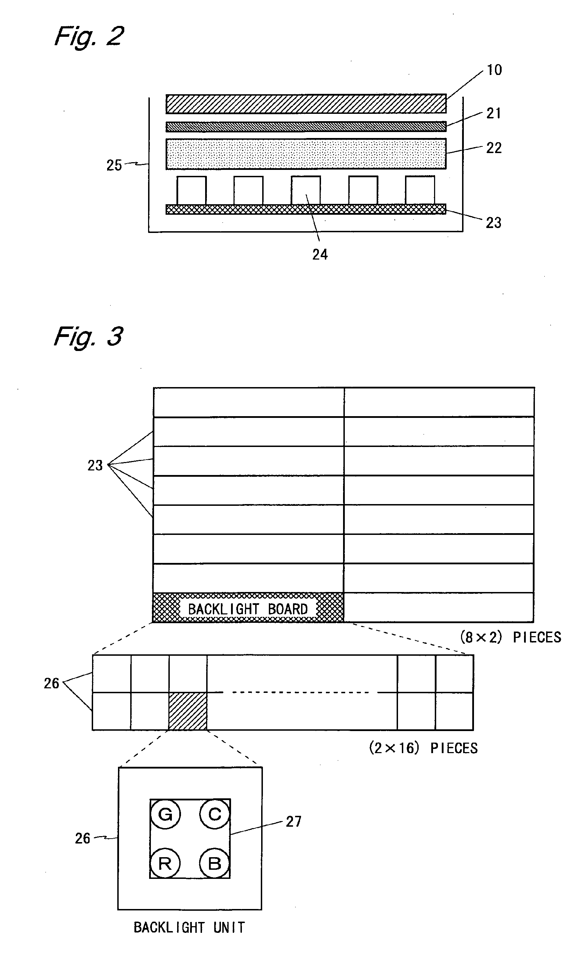

FIG. 2 provides cross-sectional views of the liquid crystal panel 10 and the backlight 20. As shown in FIG. 2, a backlight casing 25 is provided at the backside of the liquid crystal panel 10. Provided within the backlight casing 25 are a group of optical sheets 21, a diffuser plate 22, and backlight boards 23 having a plurality of LEDs 24 mounted thereon. In this manner, the backlight 20 is configured using the group of optical sheets 21, the diffuser plate 22, the backlight boards 23, the LEDs 24, and the backlight casing 25.

FIG. 3 is a view illustrating an exemplary arrangement of the backlight boards 23. In the example shown in FIG. 3, 16 backlight boards 23 are arranged with each column including eight of them and each row including two of them. Each backlight board 23 has mounted thereon a total of 32 backlight units 26 with each column including two of them and each row including 16 of them. The backlight units 26 each include a light-emitting block 27 consisting of red, green, blue, and cyan LEDs. By arranging 16 backlight boards 23 as shown in FIG. 3, the backlight 20 can be configured, including 512 light-emitting blocks 27 arranged two-dimensionally.

Note that in this example, the backlight 20 is configured using the backlight boards 23 which have a plurality of backlight units 26 arranged in arrays, but instead of using such boards, backlight boards having a plurality of backlight units arranged in a matrix may be used. Also, in this example, 512 backlight units 26 are arranged, but the number of backlight units may be arbitrary. However, when the number of backlight units is small for the size of the liquid crystal panel, the amount of backlight light might be insufficient or uneven luminance might occur in a displayed image. Therefore, for a liquid crystal panel of, for example, about 40 inches, 500 or more backlight units are preferably arranged.

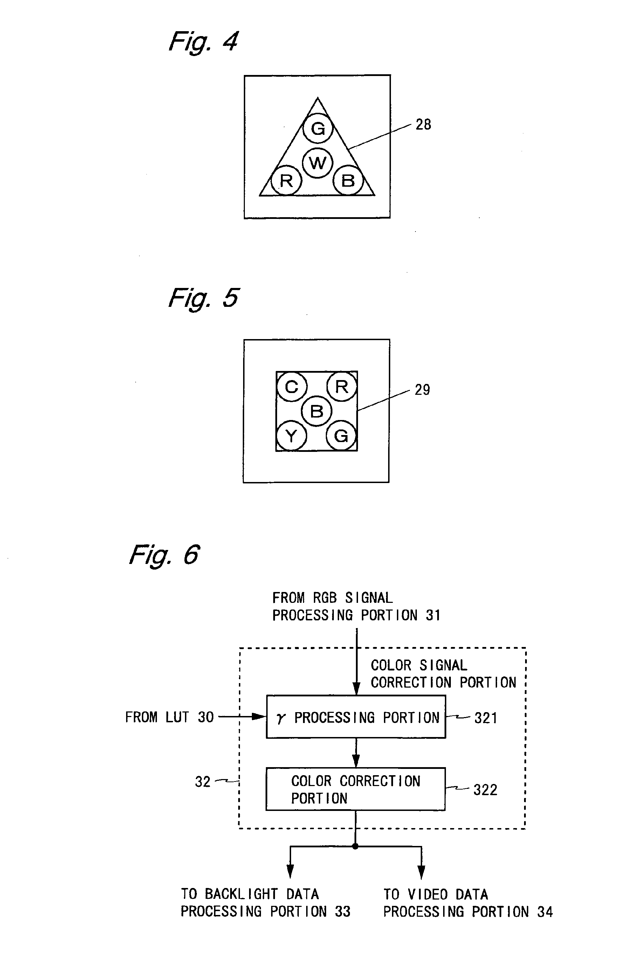

Also, in this example, the light-emitting blocks 27 include red, green, blue, and cyan LEDs, but the light-emitting blocks may include other combinations of LEDs than that specified above so long as white light is obtained. For example, light-emitting blocks 28 including red, green, blue, and white LEDs as shown in FIG. 4 may be used. In this case, light emitted from the white LED is base white light. Alternatively, light-emitting blocks 29 including red, green, blue, cyan, and yellow LEDs as shown in FIG. 5 may be used. In this case, a mixture of light emitted from the red, green, and blue LEDs is base white light.

Furthermore, while the LEDs included in the light-emitting blocks 27 are in four colors, the color filters are in three colors, and therefore the transmittance of the cyan color filter (which has a wavelength between those of green and blue) is lower than the transmittance of green and blue. Accordingly, to compensate for insufficiency of cyan, color filters may be used such that the green color filter and the blue color filter overlap in transmission wavelength band to a greater extent, or light-emitting blocks including a plurality (e.g., two) of cyan LEDs may be used.

Hereinafter, the color signal correction portion 32, the backlight data processing portion 33, and the video data processing portion 34 will be described in detail. Note that as the types of LEDs included in the light-emitting blocks increases, arithmetic operations to be described later become more complex. Accordingly, to facilitate easy understanding of the invention, the following descriptions take as an example a case where the light-emitting blocks 27 including red, green, blue, and cyan LEDs are used.

FIG. 6 is a block diagram illustrating the color signal correction portion 32 in detail. As shown in FIG. 6, the color signal correction portion 32 includes a γ processing portion 321 and a color correction portion 322. The γ processing portion 321 references γ data stored in the LUT 30, and performs linear processing on an RGB separate signal outputted by the RGB signal processing portion 31.

Note that considering here a television broadcast signal, a video signal subjected to inverse γ processing is supplied from the video signal source 2 to the liquid crystal display device 1, and the liquid crystal display device 1 performs linear processing thereon, but in the case where a linear gradation video signal is supplied to the liquid crystal display device 1, the liquid crystal display device 1 does not necessarily perform linear processing.

The color correction portion 322 performs color correction on an output signal from the γ processing portion 321 so as to achieve a preferable display considering the color reproduction range of the liquid crystal panel 10. For example, when a change of the color reproduction range due to the influence of outside light is known, the color correction portion 322 performs color correction on an output signal from the γ processing portion 321, such that an optimum display color is obtained, based on a measured intensity of outside light. Alternatively, the color correction portion 322 may detect a signal for a specific color (e. g. , a human skin color) from among output signals from the γ processing portion 321, and correct the detected signal to a color preferred by the user.

Thereafter, the color correction portion 322 transforms the signal subjected to color correction into tristimulus values (Xt,Yt,Zt) considering the color reproduction range representable by the backlight 20. Note that the color correction portion 322 may perform color correction after the transformation into the tristimulus values. Also, the color correction portion 322 may have a function of transforming a signal not conforming to television broadcast standards, such as an xvYCC signal capable of representing a wide color reproduction range, into tristimulus values. Regardless of the type of video signal inputted to the liquid crystal display device 1, the color signal correction portion 32 outputs tristimulus values to the backlight data processing portion 33 and the video data processing portion 34.

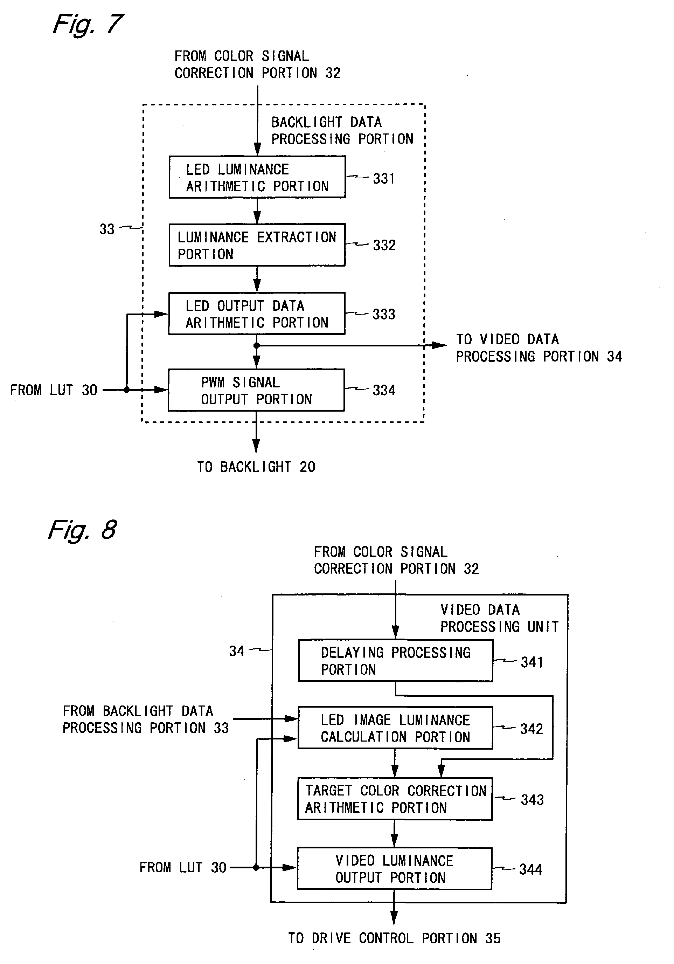

FIG. 7 is a block diagram illustrating the backlight data processing portion 33 in detail. As shown in FIG. 7, the backlight data processing portion 33 includes an LED luminance arithmetic portion 331, a luminance extraction portion 332, an LED output data arithmetic portion 333, and a PWM signal output portion 334. The backlight data processing portion 33 divides an input video signal (an output signal from the color signal correction portion 32) into a plurality of areas, and calculates luminance values for LEDs corresponding to each area based on the gradation in that area, thereby obtaining four-color backlight data used for driving the backlight 20, as described below.

The LED luminance arithmetic portion 331 processes the tristimulus values (Xt,Yt,Zt) obtained by the color signal correction portion 32 on a pixel-by-pixel basis in a manner as described below, thereby obtaining LED luminance values (RL,GL,BL,CL) for each pixel. Specifically, the LED luminance arithmetic portion 331 arbitrarily determines the luminance value CL of the cyan LED, subtracts an amount corresponding to the luminance value CL of the cyan LED from the tristimulus values in accordance with equation (1), and perform a matrix operation in accordance with equation (2).

$$\begin{cases} X' = Xt - Xc \times (CL/255) \\ Y' = Yt - Yc \times (CL/255) \quad \cdots(1) \\ Z' = Zt - Zc \times (CL/255) \end{cases}$$

$$\begin{pmatrix} RL \\ GL \\ BL \end{pmatrix} = \begin{pmatrix} Xr & Yg & Xb \\ Yr & Yg & Yb \\ Zr & Zg & Zb \end{pmatrix}^{-1} \begin{pmatrix} X' \\ Y' \\ Z' \end{pmatrix} \quad \cdots(2)$$

Note that in equations (1) and (2), Xr, Yr, and Zr represent tristimulus values when the red LED emits light at a maximum gradation, Xg, Yg, and Zg represent tristimulus values when the green LED emits light at a maximum gradation, Xb, Yb, and Zb represent tristimulus values when the blue LED emits light at a maximum gradation, and Xc, Yc, and Zc represent tristimulus values when the cyan LED emits light at a maximum gradation. Also, the maximum gradation of the cyan LED is set at 255.

The LED luminance arithmetic portion 331 repeats the aforementioned calculation while changing the luminance value CL of the cyan LED, and selects an optimum luminance value of the LED from among a plurality of results obtained. Here, in the case where a value below 0 or above 1 is included in the luminance values RL, GL, and BL obtained by equation (2), a color reproduction range (a three-dimensional space range including chromaticity and luminance) based on the luminance values (RL,GL,BL,CL) cannot be represented, and therefore the combination of luminance values is unsuitable as a solution. On the other hand, in the case where all the luminance values RL, GL, and BL obtained by equation (2) are values from 0 to 1, a color reproduction range (a three-dimensional space range including chromaticity and luminance) based on the luminance values (RL,GL,BL,CL) can be represented, and therefore the combination of luminance values is suitable as a solution. Basically, the result for the color reproduction range that can be represented is an optimum solution, but in the case where a plurality of optimum solutions are obtained due to the influence of calculation accuracy, the LED luminance arithmetic portion 331 selects, for example, one of a plurality of results that has the minimum luminance value CL of the cyan LED. Note that in the case where any of the calculation results by equation (2) is unsuitable as a solution for some reason, such as insufficient calculation accuracy, the luminance values RL, GL, and BL obtained by equation (2) may be normalized, and of the three normalized values, one value below and closest to 0 may be modified to 0, or one value above and closest to 1 may be modified to 1, so as to thereafter obtain an optimum solution.

The luminance extraction portion 332 obtains a luminance value for each area based on the LED luminance values (RL,GL,BL,CL) obtained by the LED luminance arithmetic portion 331. More specifically, the luminance extraction portion 332 divides a screen into a plurality of areas, for each of which the luminance extraction portion 332 obtains a maximum value, an average value, or both, for the luminance of the LEDs. At this time, to facilitate easy processing, the luminance extraction portion 332 preferably divides the screen into areas the number of which matches the number of backlight units 26 both in the vertical and horizontal directions. As a luminance value for each area, the luminance extraction portion 332 outputs a value based on a maximum value, an average value, or both, for the luminance of the LEDs in that area. In the following descriptions, in order for a displayed image to include areas with peak luminance as much as possible, the luminance extraction portion 332 outputs a maximum value for the luminance of the LEDs for each area.

Also, when noise is contained in a video signal externally inputted to the liquid crystal display device 1, in some cases, the luminance extraction portion 332 might not be able to correctly obtain a maximum value for the luminance of the LEDs for each area due to the influence of a noise signal (e.g., the maximum of all luminance values). Accordingly, to prevent the influence of such a noise signal, the luminance extraction portion 332 may perform grouping on luminance values of the LEDs in each area so that each group consists of, for example, 20 luminance values, and may obtain an average luminance value for each group so that a maximum average value obtained is outputted as a maximum value for the luminance of the LEDs in the area.

The LED output data arithmetic portion 333 determines final luminance values of the LEDs for four colors within the backlight units 26 while referencing the luminance value obtained for each area by the luminance extraction portion 332, considering, for example, luminance balance with surrounding backlight units and consistency with previous frames. The luminance values obtained by the LED output data arithmetic portion 333 are outputted to the PWM signal output portion 334 and the video data processing portion 34 as backlight data.

The PWM signal output portion 334 generates a PWM signal for driving the LEDs for four colors in the backlight units 26 based on the backlight data obtained by the LED output data arithmetic portion 333 while referencing the PWM data stored in the LUT 30. The generated PWM signal is supplied to the LED backlight boards 23, and used for controlling the luminance of the LEDs. Note that the color temperature of the LEDs is changed by operating current, and therefore to achieve precise color reproduction, it is necessary to control the LEDs through PWM control, and suppress a change in color of light emitted from the LEDs.

FIG. 8 is a block diagram illustrating the video data processing portion 34 in detail. As shown in FIG. 8, the video data processing portion 34 includes a delaying processing portion 341, an LED image luminance arithmetic portion 342, a target color correction arithmetic portion 343, and a video luminance output portion 344. The video data processing portion 34 performs color correction on an input video signal (an output signal from the color signal correction portion 32) while referencing the backlight data obtained by the backlight data processing portion 33, and obtains video data for three colors used for driving the liquid crystal panel 10, as described below.

The delaying processing portion 341 delays an output signal from the color signal correction portion 32 so that the timing of driving the liquid crystal panel 10 coincides with the timing of driving the backlight 20. The LED image luminance arithmetic portion 342 applies the PSF data stored in the LUT 30 to the backlight data outputted by the backlight data processing portion 33, thereby obtaining LED luminance values (RL',GL',BL',CL') corresponding to all pixels within a frame. Note that the PSF data stored in the LUT 30 is data representing the degree of spatial distribution of light due to fluctuations of an optical system and the atmosphere.

The target color correction arithmetic portion 343 obtains luminance values (R*,G*,B*) subj ected to color correction for eliminating inconsistency between a color to be displayed and an actually displayed color, based on the LED luminance values (RL',GL',BL',CL')obtained by the LED image luminance arithmetic portion 342 and an output signal from the delaying processing portion 341 (which is obtained by delaying the tristimulus values (Xt,Yt,Zt) obtained by the color signal correction portion 32). By performing color correction in the target color correction arithmetic portion 343, it becomes possible to prevent color crosstalk due to overlaps between transmission wavelengths of the color filters and emission wavelengths of the LEDs.

The video luminance output portion 344 performs y gradation correction on the post-correction luminance values (R*,G*,B*) obtained by the target color correction arithmetic portion 343 while referencing the y data (correction y data for keeping white chromaticity data constant for gradations) stored in the LUT 30, and outputs the luminance values subjected to y gradation correction to the drive control portion 35 as video data.

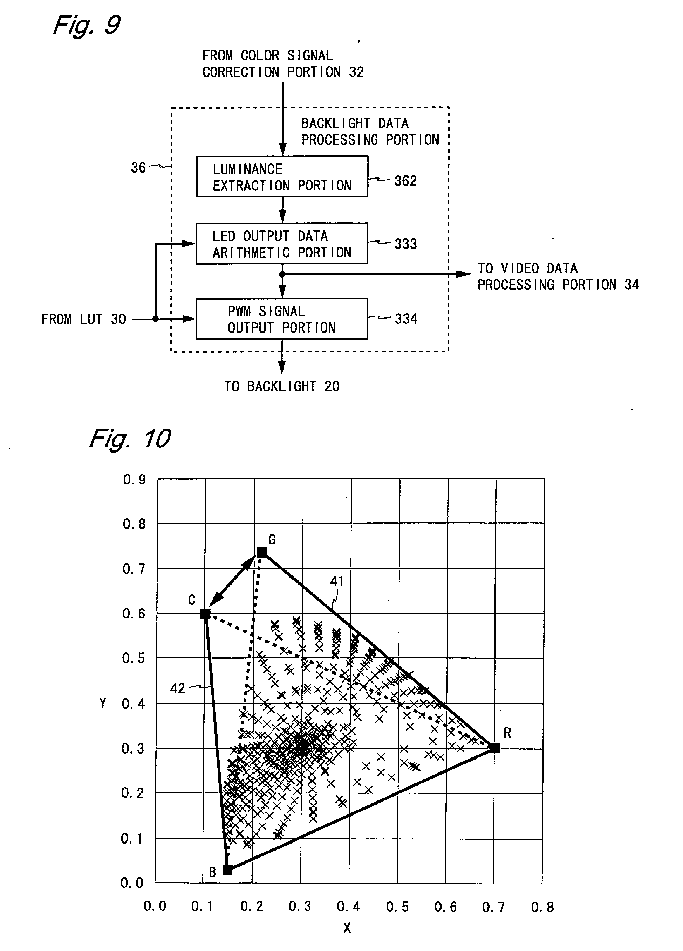

Note that the liquid crystal display device 1 may include a backlight data processing portion 36 shown in FIG. 9 in place of the backlight data processing portion 33 shown in FIG. 7. The backlight data processing portion 36 shown in FIG. 9 includes a luminance extraction portion 362, an LED output data arithmetic portion 333, and a PWM signal output portion 334.

The luminance extraction portion 362 receives signals subjected to color correction (RGB signals before transformation into tristimulus values), rather than the tristimulus values (Xt,Yt,Zt), from the color signal correction portion 32, and obtains a luminance value for each area based on the signals. More specifically, the luminance extraction portion 362 divides the screen into a plurality of areas, and obtains a maximum value, an average value, or both, for the signals subjected to color correction for each area. At this time, to facilitate easy processing, the luminance extraction portion 362 preferably divides the screen into areas the number of which matches the number of backlight units 26 both in the vertical and horizontal directions. As a luminance value for each area, the luminance extraction portion 362 outputs a value based on a maximum value, an average value, or both, for signals subjected to color correction in that area. Here, in order for a displayed image to include areas with peak luminance as much as possible, the luminance extraction portion 362 outputs a maximum value for the luminance of the LEDs in the area.

When the hue of the signal subjected to color correction is close to cyan (i.e., green and blue luminance values are high when compared to red), the luminance extraction portion 362 selects the cyan LED in place of the green LED to obtain white light. Also, in the case where the cyan LED is selected, if a red luminance value is sufficiently high (i.e., the hue is close to white), the luminance extraction portion 362 may select both the cyan LED and the green LED. The luminance extraction portion 362 outputs the luminance value obtained for each area to the LED output data arithmetic portion 333. The LED output data arithmetic portion 333 and the PWM signal output portion 334 in the backlight data processing portion 36 operate in the same manner as in the backlight data processing portion 33.

The target color correction arithmetic portion 343 will be described in detail below. The target color correction arithmeticportion 343 performs three processes as below, thereby obtaining post-correction luminance values (R*,G*, B*) based on the LED luminance values (RL',GL',BL',CL') obtained by the LED image luminance arithmetic portion 342 and the tristimulus values (Xt,Yt,Zt) obtained by the color signal correction portion 32.

As a first process, the target color correction arithmetic portion 343 obtains a color reproduction range to be achieved by light transmitted through red, green, and blue color filters (i.e., a color reproduction range representable by pixels when the backlight 20 emits light in the current state) based on the LED luminance values (RL',GL',BL',CL').

Here, an exemplary method for implementing the first process will be described, although there are various such methods. Initially, characteristics of the liquid crystal panel 10 and the backlight 20 are measured under conditions as below, and tristimulus values are obtained in advance for each case. Specifically, a maximum gradation is provided to the red display elements, and a "0" gradation is provided to the green and blue display elements, thereby making a setting such that the display surface of the liquid crystal panel 10 only emits light transmitted through the red color filters. In this state, only the red LEDs in the backlight 20 are caused to emit light at a maximum gradation, the display surface of the liquid crystal panel 10 is measured for luminance and chromaticity at that time, and the measured values are transformed into tristimulus values (Xrr,Yrr,Zrr). Also, in the same state, tristimulus values (Xrg,Yrg,Zrg), (Xrb,Yrb,Zrb), and (Xrc,Yrc,Zrc) are obtained for the respective cases when only the green LEDs are caused to emit light, only the blue LEDs are caused to emit light, and only the cyan LEDs are caused to emit light.

Next, in a similar manner, a setting is made such that only the green color filters transmit light therethrough, and tristimulus values (Xgr, Ygr, Zgr), (Xgg, Ygg, Zgg), (Xgb, Ygb, Zgb), and (Xgc, Ygc, Zgc) are obtained for the respective cases when only the red LEDs are caused to emit light, only the green LEDs are caused to emit light, only the blue LEDs are caused to emit light, and only the cyan LEDs are caused to emit light. Furthermore, a setting is made such that only the blue color filters transmit light therethrough, and tristimulus values (Xbr, Ybr, Zbr), (Xbg, Ybg, Zbg), (Xbb, Ybb, Zbb), and (Xbc, Ybc, Zbc) are obtained for the respective cases when only the red LEDs are caused to emit light, only the green LEDs are caused to emit light, only the blue LEDs are caused to emit light, and only the cyan LEDs are caused to emit light. Note that when obtaining the above tristimulus values, a light leakage amount (black luminance component) is subtracted from the measured values, considering that light leaks even when a "0" gradation is provided to display elements for each color.

The target color correction arithmetic portion 343 has the aforementioned twelve combinations of tristimulus values stored therein, and subjects the LED luminance values (RL',GL',BL',CL') to matrix operations shown in equations (3) to (5). By equation (3), tristimulus values (XR,YR,ZR) for light (red light) transmitted through the red color filters are calculated. By equation (4), tristimulus values (XG,YG,ZG) for light (green light) transmitted through the green color filters are calculated. By equation (5), tristimulus values (XB,YB,ZB) for light (blue light) transmitted through the blue color filters are calculated. Note that in equations (3) to (5), RL', GL', BL', and CL' are all from 0 to 1.

$$\begin{pmatrix} XR \\ YR \\ ZR \end{pmatrix} = \begin{pmatrix} Xrr & Yrg & Xrb & Xrc \\ Yrr & Yrg & Yrb & Yrc \\ Zrr & Zrg & Zrb & Zrc \end{pmatrix} \begin{pmatrix} RL' \\ GL' \\ BL' \\ CL' \end{pmatrix} \quad \cdots (3)$$

$$\begin{pmatrix} XG \\ YG \\ ZG \end{pmatrix} = \begin{pmatrix} Xgr & Ygg & Xgb & Xgc \\ Ygr & Ygg & Ygb & Ygc \\ Zgr & Zgg & Zgb & Zgc \end{pmatrix} \begin{pmatrix} RL' \\ GL' \\ BL' \\ CL' \end{pmatrix} \quad \cdots (4)$$

$$\begin{pmatrix} XB \\ YB \\ ZB \end{pmatrix} = \begin{pmatrix} Xbr & Ybg & Xbb & Xbc \\ Ybr & Ybg & Ybb & Ybc \\ Zbr & Zbg & Zbb & Zbc \end{pmatrix} \begin{pmatrix} RL' \\ GL' \\ BL' \\ CL' \end{pmatrix} \quad \cdots (5)$$

Next, as a second process, the target color correction arithmetic portion 343 performs a matrix operation shown in equation (6). Specifically, the target color correction arithmetic portion 343 multiplies the tristimulus values (Xt, Yt, Zt) by an inverse matrix of a matrix including the three combinations of tristimulus values obtained by the first process, thereby obtaining corrected luminance values (R*,G*,B*).

$$\begin{pmatrix} R^* \\ G^* \\ B^* \end{pmatrix} = \begin{pmatrix} XR & YG & XB \\ YR & YG & YB \\ ZR & ZG & ZB \end{pmatrix}^{-1} \begin{pmatrix} Xt \\ Yt \\ Zt \end{pmatrix} \quad \cdots (6)$$

Next, as a third process, the target color correction arithmetic portion 343 performs a process for limiting the corrected luminance values (R*,G*,B*) within a predetermined range. When values obtained by normalizing the corrected luminance values (R*,G*,B*) fall outside the range from 0 to 1, pixels cannot be set to those luminance values. Accordingly, the target color correction arithmetic portion 343 may modify the normalized values to 0 when they are below 0, and to 1 when they are above 1. Alternatively, the target color correction arithmetic portion 343 may re-normalize the corrected luminance values such that a maximum value for R*, G* and B* that is above 1 becomes 1. When this method is used, luminance becomes lower than a target value, but color matches the target value.

In this manner, by means of the target color correction arithmetic portion 343, the video data processing portion 34 obtains a color reproduction range achievable by light transmitted through the color filters for each color when the backlight 20 is driven using the backlight data obtained by the backlight data processing portion 33, and performs color correction on an input video signal (an output signal from the color signal correction portion 32) while referencing the obtained color reproduction range.

Note that in order to enlarge the color reproduction range achievable by light transmitted through the color filters for each color, the LED output data arithmetic portion 333 preferably outputs values resulting from a margin being added to values obtained through, for example, calculation (but maximum values when the results of addition exceed the maximum values) as backlight data. As a result, it becomes possible to slightly expand a color reproduction range representable by pixels (a three-dimensional space range including chromaticity and luminance) and reduce calculation errors in obtaining target color coordinates at the edge of the color reproduction range.

Also, the liquid crystal display device 1 requires multi-bit decimal point arithmetic operations to prevent occurrence of any calculation error. Accordingly, the LED output data arithmetic portion 333 preferably assigns an offset value higher than 0 to the backlight data, considering calculation accuracy, contrast values, and so on. As a result, the calculation error can be suppressed. The offset can be set to take any value higher than 0 (but within the range from 0% to 100% of a maximum value that can be taken by the backlight data) in accordance with an arbitrary design principle. As the offset, it is preferable to use a value in the range, for example, from 5% to 20% of the maximum value that can be taken by the backlight data, considering contrast of the liquid crystal panel.

FIG. 10 is a graph illustrating the color reproduction range for the liquid crystal display device 1. In FIG. 10, points R, G, B, and C denote colors of light emitted from red, green, blue and cyan LEDs, respectively, in an XYZ-color space. Also, the "x" marks denote colors of various objects that exist in actuality.

In the liquid crystal display device 1, when area-active drive is performed using the red, green and blue LEDs as is conventionally performed, a color reproduction range 41 is formed as a triangular region having vertices at three points R, G, and B. Also, in the liquid crystal display device 1, when area-active drive is performed using the cyan LEDs in place of the green LEDs, a color reproduction range 42 is formed as a triangular region having vertices at three points R, C, and B. Furthermore, in the liquid crystal display device 1, when area-active drive is performed using both the green LEDs and the cyan LEDs, a color reproduction range on a video display is formed as a triangular region having vertices at an arbitrary point between points G and C, and two points R and B, but a maximum color reproduction range that can be taken is a rectangular region having vertices at four points R, G, B, and C. In this manner, the liquid crystal display device 1 makes it possible to achieve a multi-primary color display by enlarging the color reproduction range, so that colors that exist in actuality but cannot be conventionally displayed with precision (colors that correspond to the "x" marks outside the triangle RGB) can be reproduced with precision.

As described above, the liquid crystal display device 1 according to the present embodiment is provided with: the liquid crystal panel 10 having color filters for three colors; the backlight 20 including a plurality of light sources for each of four or more colors independently controllable for luminance; the backlight data processing portion 33 for dividing an input video signal into a plurality of areas and calculating luminance values for light sources corresponding to each area based on a gradation in that area, thereby obtaining backlight data for four or more colors for use in driving the backlight; and the video data processing portion 34 for performing color correction on the input video signal while referencing the backlight data, thereby obtaining video data for three colors for use in driving the liquid crystal panel 10.

In this manner, by using the backlight 20 including light sources for four or more colors, it becomes possible to achieve a multi-primary color display by enlarging a color reproduction range. Also, since the liquid crystal panel 10 has color filters for three colors, it is possible to achieve a high-definition display when compared to the case of color filters for four or more colors. Moreover, when obtaining video data, color correction is performed while referencing the backlight data, so that it is possible to prevent color crosstalk from occurring when area-active drive is performed for independently controlling the luminance of light sources for a plurality of colors, which makes it possible to achieve precise color reproduction. In this manner, color crosstalk can be prevented, thereby achieving a high-definition multi-primary color display and precise color reproduction.

Also, the video data processing portion 34 obtains a color reproduction range achievable by light transmitted through the color filters for each color when the backlight 20 is driven using the backlight data, and performs color correction on an input video signal while referencing the obtained color reproduction range. In this manner, by obtaining a color reproduction range when the backlight emits light in the current state, and performing color correction on the input video signal while referencing that range, it becomes possible to achieve precise color reproduction.

Also, the backlight 20 includes LEDs as light sources. In this manner, by using LEDs, which are superior in terms of color reproducibility, luminance capability, size, longevity, etc., it becomes possible to readily configure a backlight including a plurality of light sources independently controllable for luminance. Moreover, by controlling the LEDs through PWM control, it becomes possible to suppress a change in color of light emitted from the LEDs, thereby achieving precise color reproduction.

Also, the backlight 20 includes a plurality of LEDs for each of the same three colors as those of the color filters, and also includes a plurality of LEDs for each of one or more colors different from those of the color filters. By using the backlight thus configured, it becomes possible to effectively enlarge a color reproduction range, thereby achieving a multi-primary color display and more precise color reproduction.

Note that for the liquid crystal display device according to the present embodiment, a variety of variants can be configured. For example, when LED characteristics fluctuate due to external factors (such as heat and aging degradation), preconditions for color correction are not satisfied, resulting in poor color reproducibility. To solve this problem, the liquid crystal display device may be provided with a function of measuring temperature or suchlike, and the backlight data processing portion may be provided with a function of changing the LED characteristics based on the measurement result. Alternatively, provided that the degradation status of the LEDs is analyzed outside the liquid crystal display device, the backlight data processing portion may be provided with a function of changing LED characteristics based on an externally provided analysis result. In this manner, according to the liquid crystal display device with the backlight data processing portion having an additional function of changing light source characteristics to be referenced when obtaining backlight data, by obtaining the backlight data while suitably changing the light source characteristics, it becomes possible to achieve precise color reproduction even when the light source characteristics fluctuate due to external factors. Moreover, the video data processing portion may be provided with a function as described above. A similar effect can be achieved by the liquid crystal display device with the video data processing portion having an additional function of changing light source characteristics to be referenced when obtaining video data.

Also, in the liquid crystal display device 1, the backlight 20 is configured using LEDs, which are superior in color reproduction characteristics, but instead of this, the backlight may be configured by, for example, two-dimensionally arranging self-light-emitting devices such as organic EL displays.

INDUSTRIAL APPLICABILITY

The liquid crystal display device of the present invention achieves effects of a high-definition multi-primary color display and precise color reproduction, and therefore can be used in various types of electronic equipment, including, for example, liquid crystal televisions and liquid crystal displays.

**Claims**

1. A liquid crystal display device having a function of controlling backlight luminance, comprising:

   a liquid crystal panel having color filters for three colors;
   a backlight including a plurality of light sources for each of four or more colors independently controllable for luminance;
   a backlight data processing portion for dividing an input video signal into a plurality of areas and calculating luminance values for light sources corresponding to each area based on a gradation in that area, thereby obtaining backlight data for four or more colors for use in driving the backlight; and
   a video data processing portion for performing color correction on the input video signal while referencing the backlight data, thereby obtaining video data for three colors for use in driving the liquid crystal panel.

2. The liquid crystal display device according to claim 1, wherein the video data processing portion obtains a color reproduction range achievable by light transmitted through the color filters for each color when the backlight is driven using the backlight data, and performs color correction on the input video signal while referencing the obtained color reproduction range.

3. The liquid crystal display device according to claim 1, wherein the backlight includes light-emitting diodes as the light sources.

4. The liquid crystal display device according to claim 3, wherein the light-emitting diodes are controlled using a pulse-width modulation signal.

5. The liquid crystal display device according to claim 3, wherein the backlight includes a plurality of light-emitting diodes for each of the same three colors as those of the color filters and also includes a plurality of light-emitting diodes for each of one or more colors different from those of the color filters.

6. The liquid crystal display device according to claim 1, wherein the backlight data processing portion obtains backlight data with an added margin, in order to enlarge a color reproduction range achievable by light transmitted through the color filters for each color.

7. The liquid crystal display device according to claim 1, wherein the backlight data processing portion obtains backlight data with an offset higher than zero, in order to suppress a calculation error.

8. The liquid crystal display device according to claim 1, wherein the backlight data processing portion has a function of changing characteristics of the light sources that are to be referenced when obtaining the backlight data.

9. The liquid crystal display device according to claim 1, wherein the video data processing portion has a function of changing characteristics of the light sources that are to be referenced when obtaining the video data.

10. A display method in a liquid crystal display device provided with a liquid crystal panel having color filters for three colors and a backlight including a plurality of light sources for each of four or more colors independently controllable for luminance, the method comprising the steps of:

dividing an input video signal into a plurality of areas and calculating luminance values for light sources corresponding to each area based on a gradation in that area, thereby obtaining backlight data for four or more colors;
performing color correction on the input video signal while referencing the backlight data, thereby obtaining video data for three colors;
driving the backlight using the backlight data; and
driving the liquid crystal panel using the video data.

*Fig. 1*

## Fig. 2

## Fig. 3

BACKLIGHT BOARD

(8×2) PIECES

(2×16) PIECES

BACKLIGHT UNIT

## Fig. 4

## Fig. 5

## Fig. 6

FROM RGB SIGNAL
PROCESSING PORTION 31

COLOR SIGNAL
CORRECTION PORTION

FROM LUT 30 → | γ PROCESSING PORTION | ∼ 321

32 ∼ | COLOR CORRECTION PORTION | ∼ 322

TO BACKLIGHT DATA
PROCESSING PORTION 33

TO VIDEO DATA
PROCESSING PORTION 34

## Fig. 7

FROM COLOR SIGNAL
CORRECTION PORTION 32

BACKLIGHT DATA
PROCESSING PORTION

33

LED LUMINANCE
ARITHMETIC PORTION — 331

LUMINANCE EXTRACTION
PORTION — 332

LED OUTPUT DATA
ARITHMETIC PORTION — 333

TO VIDEO DATA
PROCESSING PORTION 34

FROM LUT 30 —

PWM SIGNAL
OUTPUT PORTION — 334

TO BACKLIGHT 20

## Fig. 8

FROM COLOR SIGNAL
CORRECTION PORTION 32

VIDEO DATA
PROCESSING UNIT

34

DELAYING PROCESSING
PORTION — 341

FROM BACKLIGHT DATA
PROCESSING PORTION 33

LED IMAGE LUMINANCE
CALCULATION PORTION — 342

TARGET COLOR CORRECTION
ARITHMETIC PORTION — 343

FROM LUT 30 —

VIDEO LUMINANCE
OUTPUT PORTION — 344

TO DRIVE CONTROL PORTION 35

*Fig. 9*

FROM COLOR SIGNAL
CORRECTION PORTION 32

BACKLIGHT DATA
PROCESSING PORTION

36

LUMINANCE
EXTRACTION PORTION — 362

LED OUTPUT DATA
ARITHMETIC PORTION — 333

TO VIDEO DATA
PROCESSING PORTION 34

FROM LUT 30

PWM SIGNAL
OUTPUT PORTION — 334

TO BACKLIGHT 20

*Fig. 10*

*Fig. 11*

<div align="center">

**INTERNATIONAL SEARCH REPORT**

</div>

| | International application No. |
|---|---|
| | PCT/JP2008/068350 |

A. CLASSIFICATION OF SUBJECT MATTER
*G02F1/133*(2006.01)i, *F21S2/00*(2006.01)i, *F21S8/04*(2006.01)i, *G02F1/13357* (2006.01)i, *G09G3/20*(2006.01)i, *G09G3/34*(2006.01)i, *G09G3/36*(2006.01)i, *F21Y101/02*(2006.01)n

According to International Patent Classification (IPC) or to both national classification and IPC

B. FIELDS SEARCHED

Minimum documentation searched (classification system followed by classification symbols)
G02F1/133, F21S2/00, F21S8/04, G02F1/13357, G09G3/20, G09G3/34, G09G3/36, F21Y101/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-099250 A (Toshiba Corp.), 05 April, 2002 (05.04.02), Full text; all drawings (Family: none) | 1-10 |
| A | JP 2006-343716 A (Sony Corp.), 21 December, 2006 (21.12.06), Full text; all drawings & US 2006/0256257 A1 & EP 1722352 A1 & KR 10-2006-0116719 A & CN 1862647 A | 1-10 |
| A | JP 2003-315529 A (Toppan Printing Co., Ltd.), 06 November, 2003 (06.11.03), Full text; all drawings (Family: none) | 1-10 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 November, 2008 (13.11.08) | 25 November, 2008 (25.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005338857 A
- JP 2006113151 A
- JP 2006005940 A
- JP 2004107025 A